# FASCICULE DE BREVET EUROPEEN

(11) **EP 2 139 767 B1**
(45) Date de publication et mention de la délivrance du brevet: **24.08.2011**
(21) Numéro de dépôt: 08736375.0
(22) Date de dépôt: 18.04.2008
(51) Int. Cl.: B64D 27/26

(54) **MÂT D'ACCROCHAGE DE MOTEUR POUR AÉRONEF DISPOSANT D'UNE POUTRE D'ATTACHE MOTEUR ARRIÈRE DÉPORTÉE DU CAISSON**
FLUGZEUGMOTORBEFESTIGUNGSSTRUKTUR MIT EINEM HINTEREN MOTORANKERTRÄGER, DER SICH IN EINEM ABSTAND VOM STRUKTURKASTEN BEFINDET
AIRCRAFT ENGINE MOUNTING STRUCTURE INCLUDING A REAR ENGINE ANCHOR BEAM LOCATED AT A DISTANCE FROM THE STRUCTURE BOX

(30) Priorité: 20.04.2007 FR 0754605
(43) Date de publication de la demande: 06.01.2010
(73) Titulaire: AIRBUS OPERATIONS, 31060 Toulouse (FR)
(72) Inventeur: COMBES, Stéphane, F-31660 Buzet Sur Tarn (FR); SAMMITO, Laurent, F-31300 Toulouse (FR); BERJOT, Michael, F-31200 Toulouse (FR)
(74) Mandataire: Ilgart, Jean-Christophe
(86) Numéro de dépôt international: PCT/EP2008/054728
(87) Numéro de publication internationale: WO 2008/135364

(56) Documents cités:
- EP-A- 0 564 126
- EP-A- 1 053 938
- WO-A-2007/000456
- FR-A- 2 891 251
- US-A- 5 927 644

## Description

### DOMAINE TECHNIQUE

La présente invention se rapporte de façon générale à un ensemble moteur pour aéronef, du type comprenant un moteur, un mât d'accrochage, ainsi qu'un système de montage du moteur pourvu d'une pluralité d'attaches moteur et étant interposé entre une structure rigide du mât d'accrochage et le moteur.

L'invention se rapporte également à un tel mât d'accrochage de moteur d'aéronef.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations de l'art antérieur, le système de montage du moteur comporte une attache moteur arrière dont le corps est directement rapporté sur le longeron inférieur du caisson, avec lequel il est en contact. En effet, le corps d'attache, également dénommé poutre transversale, dispose d'une surface de fixation horizontale plaquée contre une surface de fixation horizontale de la structure rigide. L'interface de fixation horizontale formée par ces deux surfaces s'étend donc selon un plan défini par les directions longitudinale et transversale du mât d'accrochage, et se situe généralement au niveau d'une surface externe du longeron inférieur du caisson dans le cas où le moteur est destiné à être suspendu sous la voilure de l'aéronef.

Cette configuration engendre divers inconvénients parmi lesquels on compte celui lié au fait de raccorder directement la poutre de l'attache moteur arrière sur le longeron inférieur. En effet, cela implique qu'il est nécessaire d'approcher le caisson le plus près possible du carter du moteur, pour justement autoriser la mise en place de cette attache moteur arrière ne devant pas présenter une grandeur verticale trop excessive. Or cette configuration conduit la partie inférieure du caisson à constituer un obstacle important dans la zone d'écoulement du flux secondaire, et provoque donc des perturbations aérodynamiques élevées, dues en particulier à la largeur importante du caisson essentiellement dimensionné en fonction de l'interface voilure qu'il supporte. Les perturbations aérodynamiques importantes rencontrées au droit de l'attache moteur arrière provoquent une traînée se traduisant par des pertes de performances de l'aéronef.

De plus, le fait de devoir rapprocher le caisson du carter moteur requiert habituellement une modification de la géométrie de ce même caisson qui n'est alors plus en mesure de conserver une face inférieure plane. Cela se traduit inévitablement par des contraintes de fabrication dues à la complexification du dessin de la partie inférieure du caisson, ainsi que par un surdimensionnement pénalisant l'ensemble du mât d'accrochage en terme de masse globale. En ce qui concerne les solutions qui ont pour objectif d'éviter que des couples transversaux n'apparaissent dans l'attache moteur, l'art antérieur est illustré par le document EP-A-0 564 126. L'utilisation d'une nervure de déportation de l'attache moteur est illustrée par le document FR-A-2 891 251.

### EXPOSÉ DE L'INVENTION

L'invention a donc pour but de proposer un mât d'accrochage de moteur pour aéronef remédiant au moins partiellement aux inconvénients mentionnés ci-dessus, relatifs aux réalisations de l'art antérieur.

Pour ce faire, l'invention a pour objet un mât d'accrochage de moteur pour aéronef, ledit mât comportant une structure rigide formant caisson ainsi qu'un système de montage du moteur monté fixement sur ladite structure rigide et comportant notamment une attache moteur arrière comprenant un corps d'attache sur lequel est articulée au moins une manille, ledit système de montage du moteur comprenant en outre un dispositif de reprise des efforts de poussée générés par le moteur, comportant deux bielles latérales raccordées à leur extrémité arrière à un palonnier monté articulé sur un support de palonnier, lui-même monté fixement sur ledit corps d'attache de l'attache moteur arrière.

Selon l'invention, il comprend en outre une pièce intermédiaire interposée entre ledit support de palonnier et ledit caisson, un premier pion de cisaillement traversant un premier plan d'interface de fixation entre ladite pièce intermédiaire et ledit caisson, et un second pion de cisaillement traversant un second plan d'interface de fixation entre ladite pièce intermédiaire et ledit support de palonnier. De plus, en vue de côté, le point d'intersection entre un axe du premier pion et le premier plan d'interface, ainsi que le point d'intersection entre un axe du second pion et le second plan d'interface, sont situés sur l'axe commun desdites deux bielles latérales de reprise des efforts de poussée.

Ainsi, dans le cas non limitatif où le moteur est destiné à être suspendu sous la voilure de l'aéronef, l'invention proposée permet globalement de déporter l'attache moteur arrière vers le bas par rapport au caisson, grâce à la pièce intermédiaire logée entre le longeron inférieur de caisson et le support de palonnier porté par le corps d'attache moteur arrière.

L'adjonction de cette pièce intermédiaire par rapport aux réalisations de l'art antérieur permet de procurer de nombreux avantages, dont celui d'éloigner ce même caisson du moteur suspendu au mât. Par conséquent, les conditions thermiques que subit ce caisson sont moins importantes que celles rencontrées antérieurement dans des réalisations où l'interface de fixation de l'attache moteur arrière, prévue sur sa poutre, était située directement sur le longeron inférieur. Cet allègement des conditions thermiques permet donc d'envisager l'emploi de matériaux moins sensibles à la chaleur pour la fabrication du caisson rigide, tels que les matériaux composites comprenant un mélange de résine et de fibres de verre et/ou de carbone. Dans un tel cas, il peut avantageusement en découler un gain de masse très important pour l'ensemble du mât d'accrochage.

En outre, il est noté que l'invention proposée permet de procurer un avantage en terme de performances aérodynamiques, étant donné que la partie inférieure du caisson est à présent éloignée de l'axe moteur, de sorte que la zone d'écoulement du flux secondaire est sensiblement libérée par rapport à la configuration rencontrée antérieurement. Les perturbations aérodynamiques au droit de l'attache moteur arrière sont ainsi diminuées, cet avantage étant d'autant plus conséquent lorsque la largeur de la pièce intermédiaire est plus faible que celle du caisson. Néanmoins, il est noté que le caisson et la pièce intermédiaire déportant le corps d'attache moteur arrière pourraient disposer d'une même largeur, sans sortir du cadre de la présente invention.

D'autre part, il est bien entendu à comprendre que la géométrie du caisson n'est plus influencée par la nécessité de se rapprocher du carter moteur, puisque cette fonction peut être entièrement assurée par la pièce intermédiaire de déportation rapportée fixement sur ce caisson. La géométrie de ce dernier peut par conséquent être considérablement simplifiée, tout comme sa fabrication, notamment en prévoyant une face inférieure de caisson plane d'un bout à l'autre de la structure rigide, selon la direction longitudinale de celle-ci. Sa masse est alors réduite et parfaitement optimisée, dans la mesure où la partie inférieure du caisson ne présente avantageusement plus de décrochement de largeur importante exclusivement destiné à se rapprocher du carter moteur.

Par ailleurs, l'alignement des premier et second pions de cisaillement dans l'axe des bielles de reprise, correspondant également de préférence au plan du palonnier en vue de côté, permet de n'induire aucun moment transversal parasite lié à la reprise des efforts de poussée. Ces efforts peuvent alors transiter successivement à travers les bielles de reprise, le palonnier, l'axe d'articulation du palonnier, le support de palonnier, le second pion de cisaillement, la pièce intermédiaire, le premier pion de cisaillement, puis enfin le caisson.

De préférence, ladite attache moteur arrière est pourvue de chaque côté dudit caisson d'au moins une ferrure latérale au contact d'un panneau latéral dudit caisson et montée fixement sur celui-ci, ladite ferrure latérale comportant une surface de fixation en contact avec une surface de fixation prévue sur le corps d'attache moteur arrière, ladite surface de fixation des ferrures étant située au-delà dudit caisson en direction de ladite au moins une manille. Ainsi, dans le cas où le moteur est destiné à être suspendu sous la voilure de l'aéronef, et où ledit caisson est formé par l'assemblage d'un longeron supérieur, d'un longeron inférieur, de deux panneaux latéraux et de nervures transversales reliant lesdits longerons et panneaux, ladite surface de fixation des ferrures latérales et ledit corps d'attache moteur arrière sont situés sous et à distance dudit longeron inférieur.

De préférence, ladite pièce intermédiaire présente des surfaces de butée transversale au contact desdites ferrures latérales, lesdites surfaces de butée transversale étant situées au-delà dudit caisson en direction de ladite au moins une manille. Ces surfaces de butée sont judicieusement prévues pour faire face à la configuration en porte-à-faux des ferrures latérales encastrées à l'une de leur extrémité sur le caisson.

De préférence, ladite attache moteur arrière comporte en outre au moins un pion de cisaillement vertical traversant successivement le corps d'attache, ladite pièce intermédiaire, et un longeron dudit caisson, ledit pion de cisaillement étant capable d'assurer la reprise des efforts s'exerçant selon une direction transversale dudit mât.

Selon un autre mode de réalisation préféré de la présente invention, il est prévu, de chaque côté de ladite pièce intermédiaire, une ferrure secondaire montée fixement sur ledit caisson et présentant une surface de butée transversale au contact d'au moins l'une desdites ferrures latérales, lesdites surfaces de butée transversale étant situées au-delà dudit caisson en direction de ladite au moins une manille. Ainsi, la fonction de butée transversale n'est plus assurée par la pièce intermédiaire, dont la conception peut alors être simplifiée, mais par des ferrures secondaire prévues à cet effet. De plus, on prévoit de préférence que la ferrure secondaire est montée sur ledit corps d'attache moteur arrière par l'intermédiaire d'un axe transversal de raccordement.

Dans un tel cas, et lorsque ladite attache moteur arrière est pourvue, de chaque côté dudit caisson, de deux ferrures latérales espacées longitudinalement, agencées au contact du panneau latéral dudit caisson et montées fixement sur celui-ci, on prévoit de préférence que ledit axe transversal de raccordement est situé entre les deux ferrures latérales espacées longitudinalement. Cela simplifie considérablement le montage de l'ensemble moteur, étant donné que lorsque le moteur est approché du mât, il suffit alors, pour raccorder les ferrures secondaires sur le corps d'attache moteur arrière, d'introduire l'axe transversal de raccordement depuis l'extérieur du caisson, entre les deux ferrures latérales du côté de caisson concerné. L'opérateur dispose par conséquent d'une accessibilité tout à fait satisfaisante pour réaliser un tel montage, ne nécessitant aucun outillage particulier.

De préférence, la surface de fixation de chacune des ferrures latérales de l'attache arrière prend la forme d'une surface plane orientée selon un plan défini par la direction transversale et une direction longitudinale du mât.

De manière préférée, chacune des deux ferrures latérales de l'attache arrière est réalisée d'un seul tenant, et de préférence en titane.

Il est indiqué que l'attache arrière est préférentiellement conçue de manière à définir deux demi-attaches chacune capable d'assurer la reprise des efforts s'exerçant selon une direction verticale du mât.

De préférence, lesdits premier et second pions de cisaillement sont traversés par un plan de symétrie vertical et longitudinal dudit mât, plan qui traverse également de préférence l'axe d'articulation du palonnier.

L'invention a également pour objet un ensemble moteur pour aéronef comprenant un mât tel que celui qui vient d'être présenté, ainsi qu'un moteur fixé sur ce mât.

Enfin, elle a pour objet un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention ;
- la figure 2 représente une vue schématisant la reprise des efforts effectuée par chacune des attaches moteur de l'ensemble montré sur la figure 1,
- la figure 3 représente une vue partielle détaillée en perspective de la partie arrière du système de montage du moteur, appartenant au mât montré sur la figure 1 ;
- la figure 4 représente une vue en coupe longitudinale passant par le plan de symétrie P de la figure 3 ;
- la figure 5 représente une vue en coupe longitudinale passant par le plan P1 de la figure 3 ;
- la figure 6 représente une vue de dessous de la partie arrière du système de montage montrée sur les figures 3 à 5 ;
- la figure 7 représente une vue partielle détaillée en perspective de la partie arrière du système de montage du moteur, selon un autre mode de réalisation préféré de la présente invention ;
- la figure 8 représente une vue en coupe longitudinale passant par le plan de symétrie P de la figure 7 ; et
- la figure 9 représente une vue de côté de la partie arrière du système de montage montrée sur les figures 7 et 8.

### EXPOSÉ DÉTAILLÉ DE MODES DE RÉALISATION PARTICULIERS

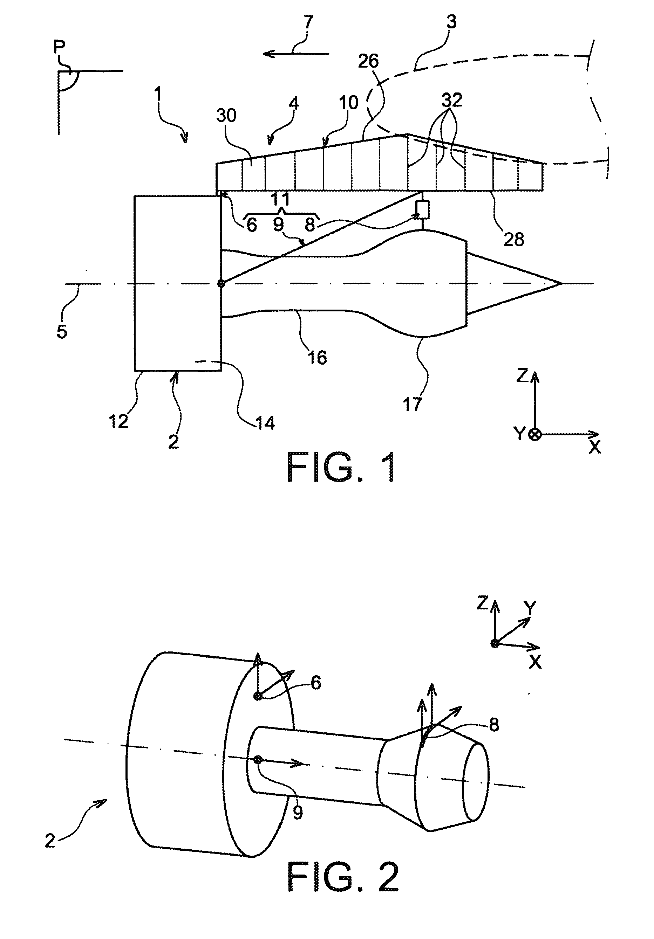

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée, cette dernière étant également dénommée structure primaire. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, le système 11 est constitué par une attache moteur avant 6, une attache moteur arrière 8 formant en réalité deux demi-attaches arrière, ainsi qu'une attache 9 formant un dispositif de reprise des efforts de poussée générés par le turbomoteur 2. Comme cela est montré schématiquement sur le figure 1, ce dispositif 9 prend la forme de deux bielles latérales (une seule étant visible en raison de la vue de côté) raccordées d'une part à une partie arrière du carter de soufflante 12, et d'autre part à un palonnier monté sur l'attache arrière 8, comme cela sera détaillé ci-après.

L'attache moteur avant 6 est solidarisée au carter de soufflante 12, et est conçue de manière à pouvoir reprendre des efforts générés par le turboréacteur 2 selon les directions Y et Z, à l'aide de manilles/biellettes. A titre indicatif, cette attache avant 6 pénètre de préférence dans une portion d'extrémité circonférentielle du carter de soufflante 12.

L'attache moteur arrière 8 constitue une particularité de l'invention et sera plus amplement détaillée en référence aux figures suivantes. Elle est globalement interposée entre le carter d'éjection 17 et la structure rigide 10 du mât. Elle est quant à elle conçue pour former deux demi-attaches disposées de façon symétrique par rapport à un plan P défini par l'axe 5 et la direction Z, chacune de ces demi-attaches étant conçue de manière à pouvoir reprendre des efforts générés par le turboréacteur 2 selon la direction Z, mais pas ceux s'exerçant selon les directions X et Y. Cependant, on peut prévoir que cette attache arrière est aussi en mesure de reprendre, avec une portion plus centrale, des efforts générés par le turboréacteur 2 selon la direction Y, tel que cela est représenté sur la figure 2.

De cette manière, comme on peut le voir schématiquement sur la figure 2, la reprise des efforts s'exerçant selon la direction X s'effectue à l'aide du dispositif 9, la reprise des efforts s'exerçant selon la direction Y s'effectue à l'aide l'attache avant 6 et de la portion centrale de l'attache arrière, et la reprise des efforts s'exerçant selon la direction Z s'effectue conjointement à l'aide de l'attache avant 6 et des deux demi-attaches arrière.

D'autre part, la reprise du moment s'exerçant selon la direction X s'effectue verticalement à l'aide des deux demi-attaches de l'attache 8, la reprise du moment s'exerçant selon la direction Y s'effectue verticalement à l'aide des deux demi-attaches de l'attache 8 conjointement avec l'attache 6, et la reprise du moment s'exerçant selon la direction Z s'effectue transversalement à l'aide de la portion centrale de l'attache 8, conjointement avec l'attache 6.

A nouveau en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. Néanmoins, l'une des particularités réside ici dans le fait que le longeron inférieur 28 s'étend dans un plan incliné par rapport à l'horizontale, sur toute sa longueur, comme montré sur la figure 1. L'inclinaison est telle que le longeron inférieur 28, parallèle à la direction Y, se rapproche de l'axe 5 en allant vers l'arrière, dans le but de se rapprocher du carter d'éjection 17 afin de permettre la mise en place de l'attache moteur arrière 8, qui reste tout de même déportée vers le bas par rapport à ce longeron 28 comme cela sera détaillé ci-après. De préférence, l'ensemble des éléments formant le caisson sont réalisés en matériaux composites comprenant un mélange de résine et de fibres de verre et/ou de carbone.

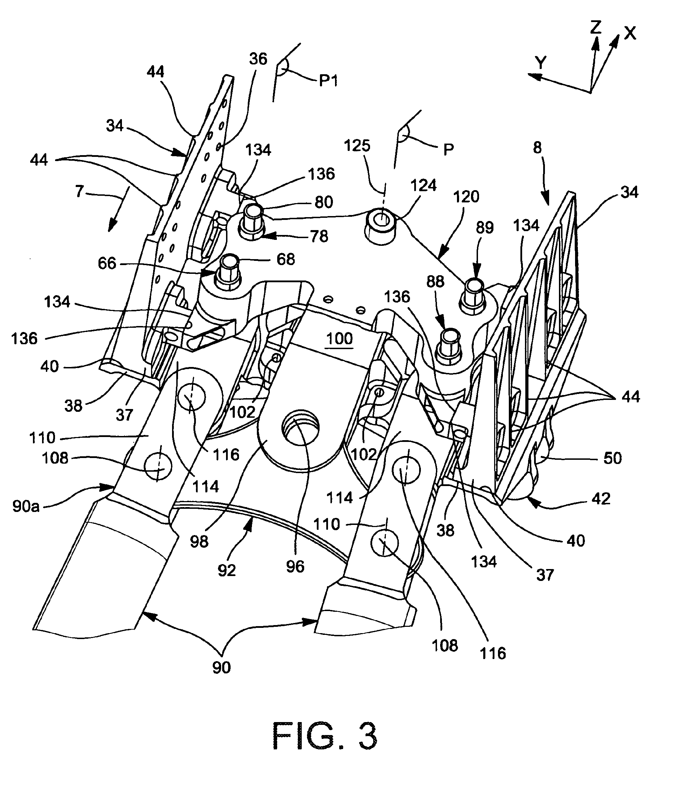

En référence aux figures 3 à 6, on peut voir l'attache moteur arrière 8 dont certains éléments ont été volontairement omis, pour des raisons évidentes de clarté. Comme cela sera détaillé ultérieurement, il est noté que l'attache moteur arrière 8 coopère étroitement avec le dispositif de reprise de poussée 9.

Il va tout d'abord être décrit la partie de l'attache 8 formant les deux demi-attaches arrière assurant chacune uniquement la reprise des efforts s'exerçant selon la direction Z, et étant agencées symétriquement par rapport au plan P précité.

Les deux demi-attaches arrière étant donc identiques, seule celle de droite vue depuis l'arrière vers l'avant, à savoir celle traversée par le plan vertical P1 parallèle au plan de symétrie P, sera détaillée ci-après. Globalement, celle-ci comprend une ferrure latérale 34 présentant de préférence un plan de symétrie orienté selon les directions Y et Z, cette ferrure 34 étant rapportée fixement et directement sur la surface extérieure du panneau latéral associé 30 du caisson, à l'aide d'une surface intérieure 36.

La ferrure 34 s'étend verticalement sur le panneau latéral 30 sur lequel elle est par exemple rapportée fixement par boulonnage/éclissage, et se prolonge vers le bas au-delà du longeron inférieur 28, en direction du moteur. Elle se termine donc en porte-à-faux par une plaque de fixation 37 définissant une surface de fixation 38 en contact avec une surface de fixation 40 prévue sur un corps 42 de l'attache moteur arrière, assimilable à une poutre transversale réalisée d'un seul tenant.

Les surfaces en contact 38 et 40, agencées à distance du longeron inférieur 28 en direction du moteur, constituent une interface de fixation prenant la forme d'une surface plane orientée selon un plan XY.

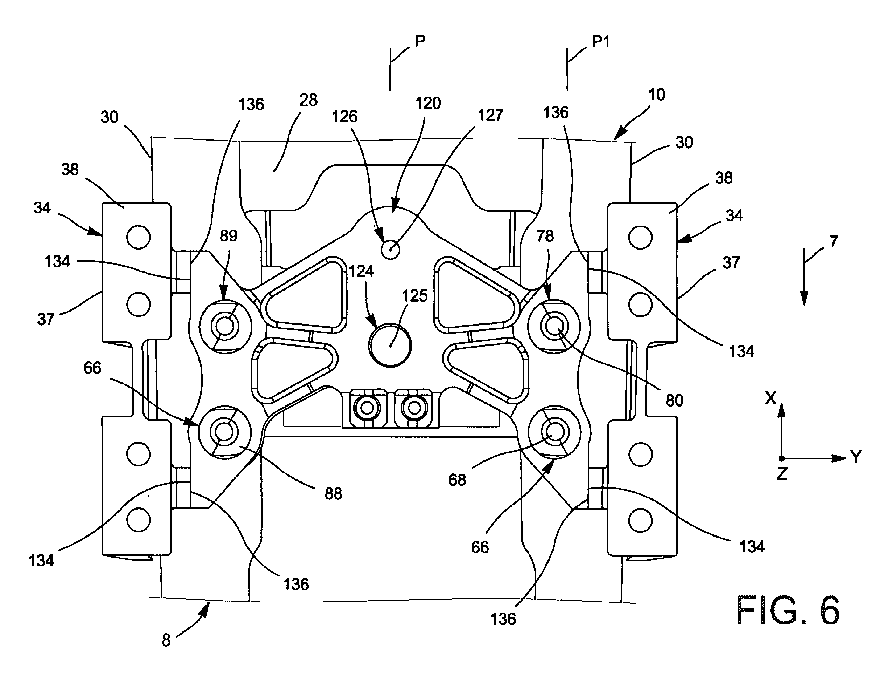

D'autre part, la ferrure latérale 34 faisant saillie également latéralement du caisson comme visible sur la figure 6, comporte des nervures de renfort 44 orientées selon des plans parallèles YZ.

Chaque ferrure latérale 34, qui est de préférence réalisée d'une seul tenant et en titane, est donc fixée au corps d'attache arrière 42 disposé transversalement au dessous et à distance du longeron inférieur 28. Ce corps 42, présentant également le plan P comme plan de symétrie, est donc au contact des deux surfaces de fixation 38 coplanaires et disposées de part et d'autre du caisson, par l'intermédiaire de ses deux surfaces de fixation 40 également coplanaires, respectivement en contact et en regard deux à deux avec les surfaces 38. La fixation s'effectue de préférence par l'intermédiaire de boulons verticaux (non représentés) traversant la plaque de fixation 37 ainsi qu'une partie supérieure de ce corps 42.

Le corps 42 comporte alors une chape 50 faisant partie intégrante de la demi-attache arrière droite, sur laquelle est articulée une manille 52 par l'intermédiaire d'un axe 54 orienté selon la direction X. A titre indicatif, un second axe 56 également orienté selon la direction X est également prévu au niveau d'une extrémité inférieure de la manille 52, de manière à articuler cette dernière sur une ferrure/chape (non représentée) solidarisée au carter du turboréacteur 2. Par conséquent, on peut donc comprendre que chaque demi-attache arrière comprend la manille articulée 52, la chape 50 et la ferrure 34, les deux chapes 50 des deux demi-attaches étant par ailleurs réunies au sein du même corps d'attache arrière 42, de préférence réalisé d'un seul tenant.

Il ressort de la description qui précède que l'attache arrière 8 forme deux demi-attaches chacune capable d'assurer la reprise des efforts s'exerçant selon la direction Z. Or dans un mode de réalisation préféré de la présente invention, on prévoit que l'attache arrière 8 est également capable d'assurer la reprise des efforts s'exerçant selon la direction Y.

Pour ce faire, toujours en référence conjointement aux figures 3 à 6, on prévoit que l'attache moteur arrière 8 comporte également un pion de cisaillement 66 orienté selon la direction Z, ce pion 66 étant prévu pour assurer la reprise des efforts s'exerçant selon une direction Y, et plus particulièrement pour autoriser le passage de ces efforts entre le corps d'attache arrière 42 et la structure rigide 10 du mât d'accrochage.

Le pion 66 comporte une extrémité supérieure 68 située au niveau de l'une des nervures transversales 32 en forme de cadre, cette extrémité 68 occupant d'ailleurs un positionnement en saillie à l'intérieur de ce cadre la rendant facilement accessible. Le pion 66 se prolonge alors vers le bas en traversant successivement la partie inférieure de la nervure 32 concernée et le longeron inférieur 28, puis une pièce intermédiaire rapportée sous ce longeron, dont la particularité sera détaillée ultérieurement. Il comporte ensuite une extrémité inférieure 70 faisant saillie vers le bas par rapport au longeron 28 du caisson, et étant logée dans un orifice 72 du corps d'attache arrière 42. C'est donc le contact entre la surface de cette extrémité 70 et celle de l'orifice 72 qui permet d'assurer la reprise des efforts selon la direction Y. A titre indicatif, il est noté que l'orifice 72 dispose d'une forme globalement ovale sensiblement complémentaire de celle du pion de cisaillement 66, et prend la forme d'un trou borgne pratiqué dans la partie supérieure du corps d'attache 42.

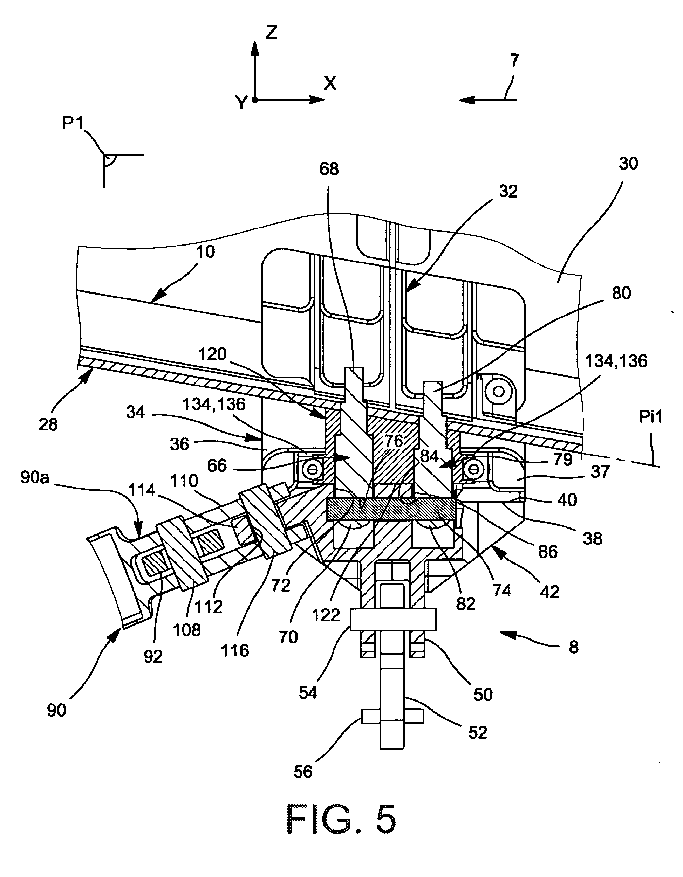

De plus, il est de préférence prévu une première goupille 74 visible sur la figure 5, traversant successivement une partie avant du corps 42, un alésage 76 pratiqué dans l'extrémité inférieure 70 du pion 66, ainsi qu'une partie centrale du même corps 42.

Avec cet agencement particulier dans lequel la goupille 74 prenant la forme d'un axe est de préférence orientée selon la direction X, la coopération entre l'alésage 76 et la goupille 74 permet par conséquent de reprendre les efforts s'exerçant selon la direction Z en cas de défaillance/rupture de l'une des deux ferrures latérales 34, et en particulier celle appartenant à la demi-attache arrière de droite, en raison de la proximité entre le pion 66 et cette demi-attache de droite. Cela permet avantageusement d'assurer une fonction de sécurité dite « Fail Safe » pour la transmission d'efforts selon la direction Z, sans pour autant complexifier sensiblement la conception du corps 42. Par ailleurs, il est noté que pour que ce chemin d'efforts soit uniquement opérant lors d'une défaillance/rupture de la demi-attache arrière de droite, on prévoit alors un jeu fonctionnel entre la goupille 74 et l'alésage 76.

Pour renforcer cette fonction « Fail Safe » liée à la demi-attache arrière droite, l'attache moteur arrière 8 comporte en outre un pion annexe 78 aligné avec le pion de cisaillement 66 dans la direction de la goupille X, donc préférentiellement dans la direction X. Bien entendu, la direction de la goupille 74 pourrait être différente, tout en restant préférentiellement dans un plan XY, sans sortir du cadre de l'invention.

Ce pion 78 présente une conception similaire à celle du pion 66 décrit ci-dessus. Ainsi, il comporte une extrémité supérieure 80 également située au niveau de la nervure transversale 32 précitée, cette extrémité 80 occupant un positionnement en saillie à l'intérieur du cadre formé par cette nervure, ce qui la rend facilement accessible. Le pion 78 se prolonge alors vers le bas en traversant successivement la partie inférieure de la nervure 32 concernée et le longeron inférieur 20, pour ensuite traverser la pièce intermédiaire. Il comporte également une extrémité inférieure 82 faisant saillie vers le bas par rapport au longeron 28 du caisson, et étant logée dans un orifice 86 du corps d'attache arrière 42. De préférence, toujours de manière à rendre le système d'attaches moteur isostatique et d'empêcher au premier pion annexe 78 de reprendre des efforts s'exerçant selon la direction Y, on prévoit un jeu entre la surface de l'extrémité 82 et celle de l'orifice 86. Ici encore, il est noté que l'orifice 86 dispose d'une forme globalement ovale sensiblement complémentaire de celle du pion annexe 78, et prend la forme d'un trou borgne pratiqué dans la partie supérieure du corps d'attache 42.

Comme cela est visible sur la figure 5, l'attache arrière 8 est conçue de sorte que la goupille 74 sortant de la partie centrale du corps 42 traverse ensuite successivement un alésage 84 pratiqué dans l'extrémité inférieure 82 du pion 78, ainsi qu'une partie arrière du même corps 42, jusqu'à déboucher en dehors de celui-ci. Ici aussi, il est noté que pour que le chemin d'efforts constitué par les éléments 74 et 82 soit uniquement opérant lors d'une défaillance/rupture de la demi-attache arrière de droite, on prévoit un jeu fonctionnel entre la goupille 74 et l'alésage 84.

L'attache arrière 8 comporte un montage similaire à celui qui vient d'être décrit, mais qui est associé à la demi-attache arrière de gauche, notamment dans le but d'assurer la fonction de sécurité « Fail Safe » pour la transmission d'efforts selon la direction Z normalement assurée par cette demi-attache arrière de gauche. En effet, il est également prévu un pion de cisaillement 88 et un pion annexe 89 respectivement identiques aux pions 66 et 78, ces pions 88, 89 étant pourvus d'extrémités inférieures logées dans le corps 42 et traversées par une seconde goupille (non représentée). Ainsi, il doit être compris que l'ensemble pions/goupille associé à la demi-attache arrière de gauche est le symétrique par rapport au plan P de l'ensemble pions/goupille associé à la demi-attache arrière de droite, la seule différence entre ces deux ensembles étant le jeu recherché entre le pion de cisaillement 88 et son orifice associé (non représenté) pratiqué dans le corps d'attache arrière. Ce jeu est encore une fois ici prévu de sorte que le pion 88 permette uniquement d'assurer la fonction « Fail Safe » pour la transmission des efforts s'exerçant selon la direction Y, en cas de défaillance survenant au niveau du premier pion de cisaillement 66.

En référence aux figures 3 à 5, on peut apercevoir l'une des particularités de la présente invention, relative au raccordement du dispositif de reprise des efforts de poussée 9 sur l'attache moteur arrière 8 et sur le caisson 10. Ce raccordement est spécifique, en particulier en raison de la déportation du corps 42 à distance et sous le caisson 10, réalisée de manière à pouvoir éloigner ce caisson du moteur 2.

Le dispositif 9 comprend globalement deux bielles latérales de reprise des efforts de poussée 90, chacune de ces bielles comportant une extrémité avant (non représentée sur ces figures) raccordée au carter de soufflante 12, par exemple sur ou à proximité d'un plan médian horizontal du turbomoteur 2.

Les deux bielles latérales 90, disposées de part et d'autre du plan P, ont chacune une extrémité arrière 90a raccordée à un palonnier 92, comme cela sera détaillé ci-après. Le palonnier 92 est couplé à un axe d'articulation 94, de préférence du type axe simple et non axe double, positionné de manière à être traversé par le plan P vertical et longitudinal. Cet axe d'articulation du palonnier traverse donc un orifice 96 pratiqué dans le palonnier 92 lui-même, ainsi qu'une chape 98 dont les deux flancs sont disposés de part et d'autre du palonnier 92. A cet égard, il est noté que cette chape 98 appartient à un support de palonnier 100 monté fixement sur la partie centrale du corps d'attache moteur arrière 42, de préférence au-dessus de cette partie centrale, qui peut présenter une échancrure 104 prévue pour le logement de l'extrémité arrière du support 100. La fixation s'effectue par exemple à l'aide de boulons traversant des orifices 102 du support de palonnier 100. Ainsi, ce dernier est situé entre le caisson et la poutre 42 dans la direction verticale, tout en étant maintenu à distance de ce même caisson.

Une première liaison mécanique, constituant la liaison par laquelle sont destinés à transiter les efforts de poussée en mode normal, est réalisée à l'aide d'un axe d'articulation 108 reliant l'extrémité arrière 90a avec l'une des extrémités latérales du palonnier 92. Pour compléter cette première liaison mécanique, il est prévu une seconde liaison mécanique avec jeu sur l'extrémité arrière 90a de chaque bielle 90, le jeu servant à rendre cette liaison inactive tant que sa première liaison associée ne subit pas de rupture/défaillance. Il est noté que la seconde liaison est conçue de manière à pouvoir reprendre des efforts en cas de rupture/défaillance, à la fois en mode poussée et en mode inverseur de poussée.

Pour ce faire, la seconde liaison mécanique est réalisée à l'aide d'une chape 110 pratiquée sur l'extrémité 90a de la bielle en arrière de la première liaison, et d'un orifice 112 pratiqué dans une extrémité avant d'une languette de support 114 logée entre les deux flancs de cette même chape 110. De plus, un axe d'articulation 116 traverse avec jeu la chape 110 et l'orifice 112, cet axe 116, de préférence simple, étant par exemple sensiblement incliné selon la direction Z et parallèle à l'axe 108 et l'axe 94. Comme cela est visible sur la figure 5, l'axe 108 de la première liaison traverse également la chape 110 précitée.

De préférence, la languette de support 114 se situe sensiblement dans le prolongement de l'axe de sa bielle 90 associée, ce qui permet d'assurer une continuité dans la reprise des efforts opérée en mode de défaillance/rupture. Par ailleurs, l'extrémité arrière de chacune des deux languettes de support 114 est issue de la poutre 42 de l'attache arrière 8, avec laquelle ces languettes sont de préférence réalisées d'un seul tenant. Bien entendu, ces languettes 114 pourraient être réalisées séparément et rapportées fixement sur la poutre 42, sans sortir du cadre de l'invention.

En outre, il est indiqué qu'en mode de défaillance/rupture du palonnier 92 ou de son axe associé 94, les efforts selon la direction longitudinale provenant des bielles latérales 90 sont transmis vers la structure rigide 10 à l'aide des secondes liaisons mécaniques, via les languettes de support 114 disposées symétriquement par rapport au plan P. A ce titre, il est noté que les efforts transitant dans les languettes 114 passent ensuite à travers les pions de cisaillement précités et la pièce intermédiaire qui sera décrite ci-dessous, avant d'être introduits dans le caisson 10.

D'autre part, en mode de défaillance/rupture de l'une des deux bielles de reprise 90, les efforts selon la direction longitudinale sont transmis à la structure rigide à l'aide de la seconde liaison mécanique de la bielle non défaillante 90, via sa languette de support 114 associée. Dans ces deux cas de défaillance/rupture, la liaison secondaire devient active par entrée en contact de son axe 116 avec l'extrémité avant de la languette qu'il traverse.

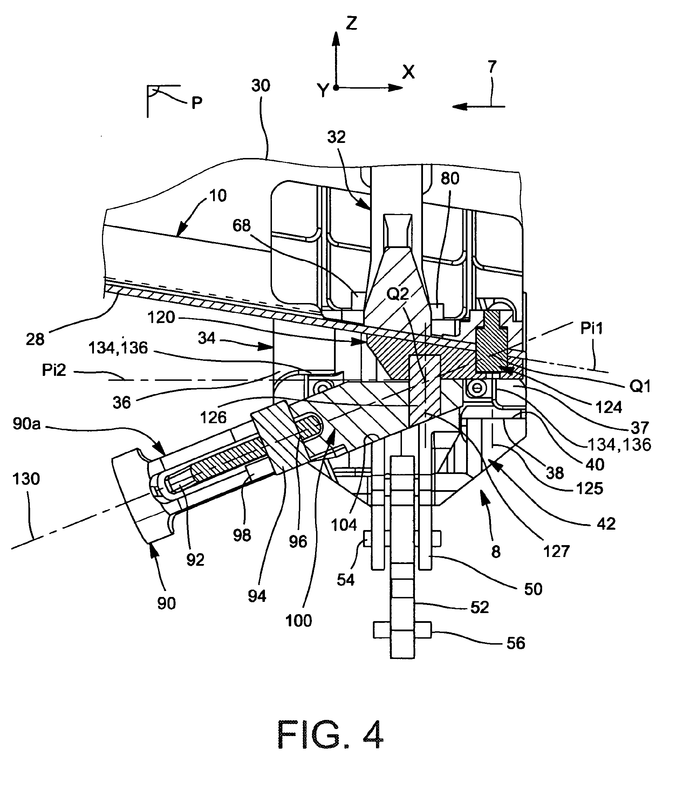

L'une des particularités de la présente invention réside dans la mise en place de la pièce intermédiaire 120 entre le support de palonnier 100 et le caisson 10, et donc également entre la poutre 42 et ce même caisson, selon la direction Z. Plus précisément, il est prévu un premier plan d'interface de fixation entre la pièce intermédiaire 120 et le longeron inférieur 28 en contact, ce plan Pi1 étant parallèle à la direction Y. De manière similaire, il est prévu un second plan d'interface de fixation entre la pièce intermédiaire 120 et le support de palonnier 100 en contact, ce plan Pi2 étant également parallèle à la direction Y et agencé en dessous du plan Pi1, bien que ces plans puissent être inclinés l'un par rapport à l'autre comme cela a été représenté. A cet égard, il est noté que l'échancrure précitée 104 dans la partie centrale de la poutre 42 permet effectivement de loger le support de palonnier 100 entre la pièce 120 et la poutre 42 comme visible sur la figure 4, alors qu'aux extrémités latérales de la poutre 42 et de la pièce intermédiaire 120, ces deux éléments sont de préférence directement en contact grâce à l'interface référencée 122 sur la figure 5. En d'autres termes, l'intégralité de la surface supérieure de la pièce intermédiaire 120 s'étend dans le plan d'interface de fixation Pi1, et reste donc au contact de la surface extérieure du longeron 28, tandis que la surface inférieure de la pièce intermédiaire 120 se décompose en une portion centrale s'étendant dans le plan d'interface de fixation Pi2 et donc en contact avec le support de palonnier 100, et deux portions d'extrémité latérale s'étendant selon l'interface 122 distincte du plan Pi2.

Pour assurer la transmission des efforts de poussée jusque dans le caisson 10, il est prévu un premier pion de cisaillement 124, de préférence d'axe vertical 125, traversant le premier plan d'interface de fixation Pi1, ainsi qu'un second pion de cisaillement 126, de préférence d'axe vertical 127, traversant le second plan d'interface de fixation Pi2. De plus, les deux pions 124, 126 sont traversés par le plan de symétrie P. En référence à la figure 4, chacun des deux pions de cisaillement 124, 126 traverse, mais pas nécessairement de part en part, uniquement les deux pièces en contact qu'il relie mécaniquement. A titre indicatif, les axes 125, 127 correspondent aux axes centraux des pions associés, et correspondent également de ce fait aux axes des orifices que ces pions 124, 126 traversent.

Ainsi, les efforts de poussées, en mode normal, transitent successivement à travers les bielles de reprise 90, les axes d'articulation 108, le palonnier 92, l'axe d'articulation 94 du palonnier, le support de palonnier 100, le second pion de cisaillement 126, la pièce intermédiaire 120, le premier pion de cisaillement 124, le longeron inférieur 28 et la nervure 32 traversée également par le pion 124.

De plus, en vue de côté ou en coupe longitudinale comme celle montrée sur la figure 4, le point d'intersection Q1 entre l'axe 125 du premier pion 124 et le premier plan d'interface Pi1 prenant la forme d'une droite, ainsi que le point d'intersection Q2 entre l'axe 127 du second pion 126 et le second plan d'interface Pi2 prenant également la forme d'une droite, sont situés sur l'axe commun 130 des deux bielles latérales de reprise des efforts de poussée 90.

Cette spécificité d'alignement des points Q1 et Q2 selon l'axe 130 des bielles 90, assimilable également au plan du palonnier 92 en vue de côté, permet avantageusement de n'induire aucun moment transversal parasite lié à la reprise des efforts de poussé, susceptible d'être transmis au caisson avec les inconvénients que cela comporte. Naturellement, le respect de cette condition d'alignement, ainsi que la prise en compte de la géométrie globale du mât, en particulier l'orientation des bielles 90 s'écartant de l'axe moteur en allant vers l'arrière, conduit à prévoir le premier point Q1 en arrière par rapport au second point Q2.

Enfin, il est indiqué que la pièce intermédiaire 120 présente au niveau de ses deux extrémités latérales des surfaces de butée transversale 134 en regard vers l'extérieur, et donc agencées selon des plans XZ. Elles sont situées au contact de surfaces de butée correspondantes 136 prévues sur les ferrures latérales 34, orientées intérieurement. Ainsi, ces surfaces de butée 134, 136 coopérant deux à deux sont situées au-dessous du caisson 10, à distance du longeron inférieur. Elles permettent avantageusement, du fait de leur positionnement, d'éviter que les ferrures latérales 34, en porte-à-faux vers le bas, ne se déplacent latéralement vers l'intérieur, à savoir vers le plan de symétrie P du mât d'accrochage.

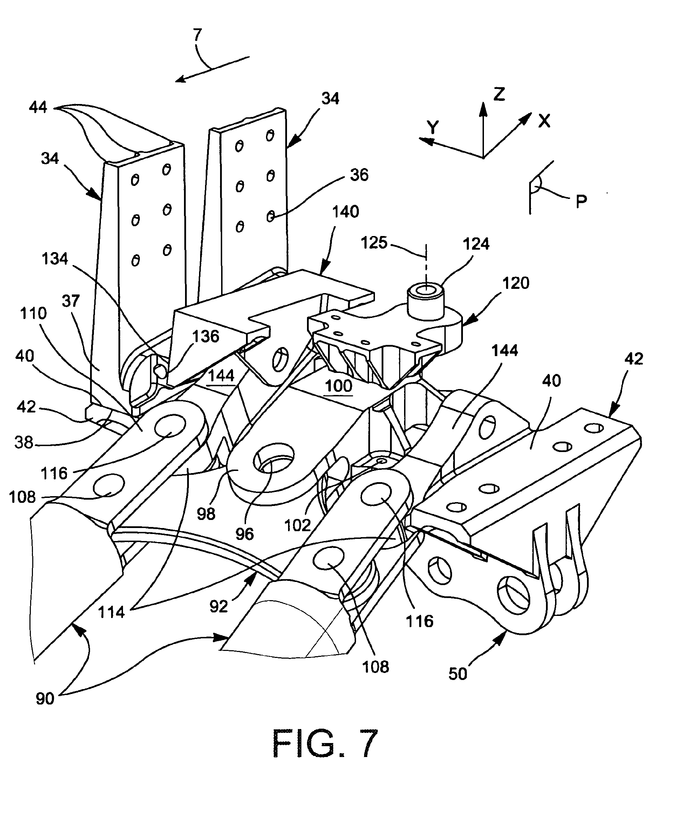

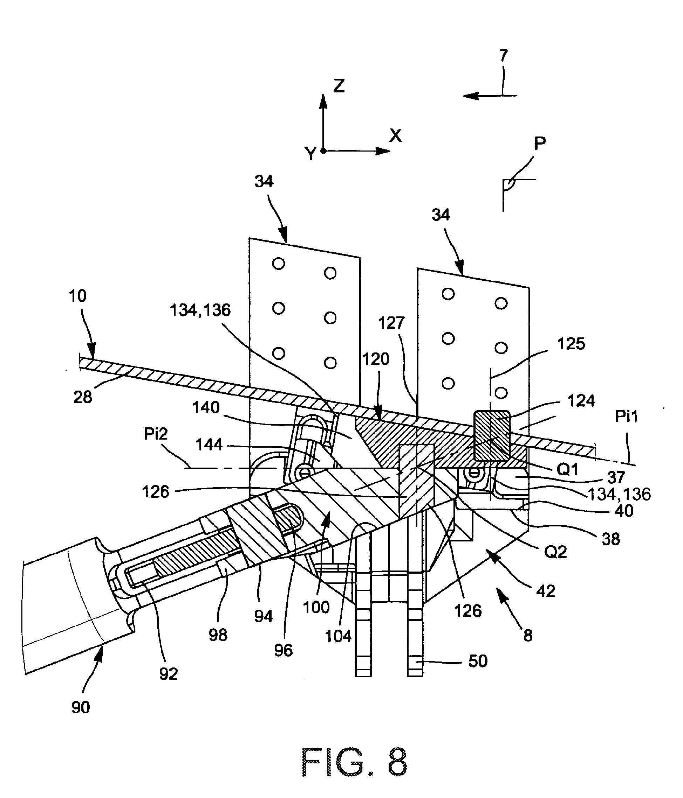

En référence à présent aux figures 7 à 9 montrant de façon détaillée la partie arrière du système de montage 11 selon un autre mode de réalisation préféré de la présente invention, on peut voir que celle-ci présente une conception similaire à celle exposée ci-dessus. A cet égard, les éléments portant les mêmes références numériques correspondent à des éléments identiques ou similaires.

La principale différence réside dans la conception de la pièce intermédiaire 120, qui ne dispose plus de ses portions d'extrémité latérale telles que décrites ci-dessus. En effet, la pièce 120 est de dimension transversale extrêmement réduite, et ne s'étend donc plus latéralement jusqu'au niveau des ferrures latérales 34. Ainsi, elle est uniquement sollicitée en mode normal de reprise des efforts de poussée, en raison de sa coopération avec les deux pions de cisaillement 124, 126, mais n'est plus sollicitée en cas de rupture/défaillance du dispositif de reprise 9. Effectivement, le chemin d'efforts de secours est réalisé différemment, notamment en ce sens qu'il n'est plus prévu de pions de cisaillement verticaux disposés à proximité des ferrures latérales 34, tels que les pions 66, 78, 88, 89 décrits dans le mode de réalisation précédemment. Cela a notamment pour avantage de ne plus nécessiter l'accès à l'intérieur du caisson pour assurer le montage de ces pions.

En revanche, de part et d'autre latéralement de la pièce intermédiaire 120, il est prévu une ferrure secondaire 140 montée fixement sur le longeron inférieur 28 avec lequel elle est en contact, cette ferrure secondaire 140 étant montée sur ledit corps d'attache moteur arrière 42 par l'intermédiaire d'un axe transversal de raccordement 142, traversant avec jeu la ferrure secondaire 140 ou le corps 42. Cela permet tout d'abord de reprendre les efforts s'exerçant selon la direction Z en cas de défaillance/rupture de l'une des ferrures latérales 34, et donc de remplir la fonction de sécurité dite « Fail Safe » pour la transmission d'efforts selon la direction Z, réalisée par les pions de cisaillement 66, 78, 88, 89 dans le mode de réalisation précédent.

De plus, il est indiqué qu'en mode de défaillance/rupture du palonnier 92 ou de son axe associé 94, les efforts selon la direction longitudinale provenant des bielles latérales 90 sont transmis vers la structure rigide 10 à l'aide des secondes liaisons mécaniques, via les languettes de support 114 disposées symétriquement par rapport au plan P. Les efforts transitant dans les languettes 114 passent ensuite à travers les axes de raccordement 142 et les ferrures secondaires 140 devenant actifs, avant d'être introduits dans le caisson 10 via le longeron 28 et la nervure traversée 32. D'autre part, en mode de défaillance/rupture de l'une des deux bielles de reprise 90, les efforts selon la direction longitudinale sont transmis à la structure rigide à l'aide de la seconde liaison mécanique de la bielle non défaillante 90, via sa languette de support 114 associée. Le chemin d'efforts vers le caisson 10 est ensuite le même que celui qui vient d'être décrit.

Il est noté qu'ici, l'attache moteur arrière est également conçue pour reprendre les efforts s'exerçant selon la direction Y, par exemple d'une manière identique ou similaire à celle exposée précédemment.

Dans ce mode de réalisation préféré, on prévoit que ce sont ces ferrures secondaires 140 qui présentent les surfaces de butée transversale 134 au contact des surfaces de butée correspondantes 136 prévues sur les ferrures latérales 34, comme cela est le mieux visible sur la figure 7.

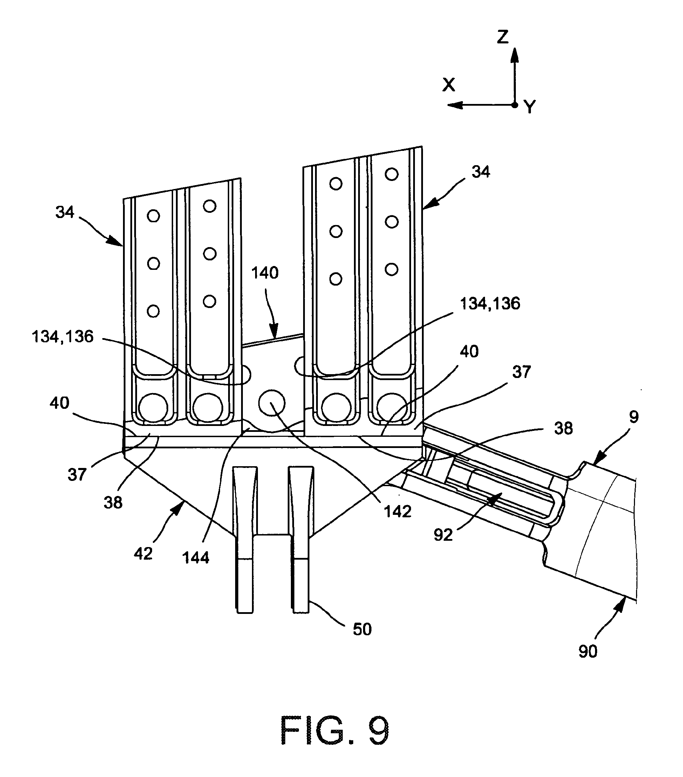

Enfin, on prévoit de préférence, de chaque côté du caisson 10, deux ferrures latérales 34 espacées longitudinalement, au lieu d'une unique ferrure réalisée d'un seul tenant dans le mode de réalisation précédent. Cette spécificité, qui pourrait néanmoins être appliqué au premier mode de réalisation, présente ici un intérêt tout particulier en ce sens qu'il est alors possible de positionner, en vue de côté telle que montrée sur la figure 9, l'axe transversal de raccordement 142 entre les deux ferrures latérales 34 espacées longitudinalement.

Cela simplifie le montage de l'ensemble moteur, étant donné qu'il suffit, pour raccorder chacune des deux ferrures secondaires 140 sur son excroissance 144 associée réalisée d'une seul tenant avec le corps d'attache moteur arrière 42, d'introduire latéralement l'axe transversal de raccordement 142 depuis le côté du caisson concerné, extérieurement à celui-ci, entre les deux ferrures latérales 140. L'opérateur dispose par conséquent d'une accessibilité tout à fait satisfaisante pour réaliser un tel montage, qui ne requiert aucun accès à l'intérieur du caisson.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant caisson ainsi qu'un système de montage du moteur (11) monté fixement sur ladite structure rigide (10) et comportant notamment une attache moteur arrière (8) comprenant un corps d'attache (42) sur lequel est articulée au moins une manille (52), ledit système de montage du moteur (11) comprenant en outre un dispositif (9) de reprise des efforts de poussée générés par le moteur (2), comportant deux bielles latérales (90) raccordées à leur extrémité arrière (90a) à un palonnier (92) monté articulé sur un support de palonnier (100), lui-même monté fixement sur ledit corps d'attache (42) de l'attache moteur arrière,
**caractérisé en ce qu'**il comprend en outre une pièce intermédiaire (120) interposée entre ledit support de palonnier (100) et ledit caisson, un premier pion de cisaillement (124) traversant un premier plan d'interface de fixation (Pi1) entre ladite pièce intermédiaire (120) et ledit caisson, et un second pion de cisaillement (126) traversant un second plan d'interface de fixation (Pi2) entre ladite pièce intermédiaire (120) et ledit support de palonnier (100),
et **en ce qu'**en vue de côté, le point d'intersection (Q1) entre un axe (125) du premier pion (124) et le premier plan d'interface (Pi1), ainsi que le point d'intersection (Q2) entre un axe (127) du second pion (126) et le second plan d'interface (Pi2), sont situés sur l'axe commun (130) desdites deux bielles latérales de reprise des efforts de poussée (90).

2. Mât d'accrochage (4) selon la revendication 1, **caractérisé en ce que** ladite attache moteur arrière (8) est pourvue de chaque côté dudit caisson d'au moins une ferrure latérale (34) au contact d'un panneau latéral (30) dudit caisson et montée fixement sur celui-ci, ladite ferrure latérale (34) comportant une surface de fixation (38) en contact avec une surface de fixation (40) prévue sur le corps d'attache moteur arrière (42), ladite surface de fixation (38) étant située au-delà dudit caisson en direction de ladite au moins une manille (52).

3. Mât d'accrochage (4) selon la revendication 2, **caractérisé en ce que** ledit caisson est formé par l'assemblage d'un longeron supérieur (26), d'un longeron inférieur (28), de deux panneaux latéraux (30) et de nervures transversales (32) reliant lesdits longerons et panneaux, ladite surface de fixation (38) et ledit corps d'attache moteur arrière (42) étant situés sous et à distance dudit longeron inférieur (28).

4. Mât d'accrochage (4) selon la revendication 2 ou la revendication 3, **caractérisé en ce que** ladite pièce intermédiaire (120) présente des surfaces de butée transversale (134) au contact desdites ferrures latérales (34), lesdites surfaces de butée transversale (134) étant situées au-delà dudit caisson en direction de ladite au moins une manille (52).

5. Mât d'accrochage (4) selon la revendication 4, **caractérisé en ce que** ladite attache moteur arrière (8) comporte en outre au moins un pion de cisaillement vertical (66) traversant successivement le corps d'attache (42), ladite pièce intermédiaire (120), et un longeron (28) dudit caisson, ledit pion de cisaillement (66) étant capable d'assurer la reprise des efforts s'exerçant selon une direction transversale (Y) dudit mât.

6. Mât d'accrochage (4) selon la revendication 2 ou la revendication 3, **caractérisé en ce qu'**il est prévu, de chaque côté de ladite pièce intermédiaire (120), une ferrure secondaire (140) montée fixement sur ledit caisson et présentant une surface de butée transversale (134) au contact d'au moins l'une desdites ferrures latérales (34), lesdites surfaces de butée transversale (134) étant situées au-delà dudit caisson en direction de ladite au moins une manille (52).

7. Mât d'accrochage (4) selon la revendication 6, **caractérisé en ce que** ladite ferrure secondaire (140) est montée sur ledit corps d'attache moteur arrière (42) par l'intermédiaire d'un axe transversal de raccordement (142).

8. Mât d'accrochage (4) selon la revendication 7, **caractérisé en ce que** ladite attache moteur arrière (8) est pourvue, de chaque côté dudit caisson, de deux ferrures latérales (34) espacées longitudinalement, agencées au contact du panneau latéral (30) dudit caisson et montées fixement sur celui-ci, ledit axe transversal de raccordement (142) étant situé entre les deux ferrures latérales (34) espacées longitudinalement.

9. Mât d'accrochage (4) selon l'une quelconque des revendications 2 à 8, **caractérisé en ce que** ladite surface de fixation (38) de chacune desdites ferrures latérales (34) de l'attache moteur arrière (8) prend la forme d'une surface plane orientée selon un plan défini par une direction transversale (Y) et une direction longitudinale (X) du mât.

10. Mât d'accrochage (4) selon l'une quelconque des revendications 2 à 9, **caractérisé en ce que** chacune desdites deux ferrures latérales (34) de l'attache moteur arrière est réalisée en titane.

11. Mât d'accrochage (4) selon l'une quelconque des revendications précédentes, **caractérisé en ce que** ladite attache moteur arrière (8) est conçue de manière à définir deux demi-attaches chacune capable d'assurer la reprise des efforts s'exerçant selon une direction verticale (Z) dudit mât.

12. Mât d'accrochage (4) selon l'une quelconque des revendications précédentes, **caractérisé en ce que** lesdits premier et second pions de cisaillement (124, 126) sont traversés par un plan de symétrie (P) vertical et longitudinal dudit mât.

13. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

14. Aéronef comprenant au moins un ensemble moteur (1) selon la revendication 13.

## Claims

1. An attachment pylon (4) for aircraft engine (2), said pylon comprising a rigid structure (10) forming a caisson and an engine-mounting system (11) mounted fixed on said rigid structure (10) and comprising especially a rear engine attachment (8) comprising an attachment body (42) on which is articulated at least one shackle (52), said engine-mounting system (11) further comprising a thrust force collection device (9) generated by the engine (2), comprising two lateral connecting rods (90) connected at their rear end (90a) to a crossbar (92) mounted articulated on a crossbar support (100), itself mounted fixed on said attachment body (42) of the rear engine attachment,
**characterised in that** it further comprises an intermediate piece (120) interposed between said crossbar support (100) and said caisson, a first shear slug (124) passing through a first interface fixing plane (Pi1) between said intermediate piece (120) and said caisson, and a second shear slug (126) passing through a second interface fixing plane (Pi2.) between said intermediate piece (120) and said crossbar support (100),
and **in that** in side elevation the intersection point (Q1) between an axis (125) of the first pin (124) and the first interface plane (Pi1) and the intersection point (Q2) between an axis (127) of the second pin (126) and the second interface plane (Pi2), are located on the common axis (130) of said two lateral thrust force collection connecting rods (90).

2. The attachment pylon (4) as claimed in Claim 1, **characterised in that** said rear engine attachment (8) is provided on each side of said caisson with at least one lateral fitting (34) in contact with a lateral panel (30) of said caisson and mounted fixed on the latter, said lateral fitting (34) comprising a fixing surface (38) in contact with a fixing surface (40) provided on the rear engine attachment body (42), said fixing surface (38) being located beyond said caisson in the direction of said at least one shackle (52).

3. The attachment pylon (4) as claimed in Claim 2, **characterised in that** said caisson is form by assembling an upper longeron (26), a lower longeron (28), two lateral panels (30) and transversal grooves (32) connecting said longerons and panels, said fixing surface (38) and said rear engine attachment body (42) being located below and at a distance from said lower longeron (28).

4. The attachment pylon (4) as claimed in Claim 2 or Claim 3, **characterised in that** said intermediate piece (120) has transversal abutment surfaces (134) in contact with said lateral fittings (34), said transversal abutment surfaces (134) being located beyond said caisson in the direction of said at least one shackle (52).

5. The attachment pylon (4) as claimed in Claim 4, **characterised in that** said rear engine attachment (8) further comprises at least one shear slug vertical (66) successively passing through the attachment body (42), said intermediate piece (120), and a longeron (28) of said caisson, said shear slug (66) being capable of ensuring thrust force collection exerted according to a transversal direction (Y) of said pylon.

6. The attachment pylon (4) as claimed in Claim 2 or Claim 3, **characterised in that** there is provided on each side of said intermediate piece (120) a secondary fitting (140) mounted fixed on said caisson and having a transversal abutment surface (134) in contact with at least one of said lateral fittings (34), said transversal abutment surfaces (134) being located beyond said caisson in the direction of said at least one shackle (52).

7. The attachment pylon (4) as claimed in Claim 6, **characterised in that** said secondary fitting (140) is mounted on said rear engine attachment body (42) by means of a transversal connecting axis (142).

8. The attachment pylon (4) as claimed in Claim 7, **characterised in that** said rear engine attachment (8) is provided, on each side of said caisson, with two lateral fittings (34) longitudinally spaced, arranged in contact with the lateral panel (30) of said caisson and mounted fixed on the latter, said transversal connecting axis (142) being located between the two lateral fittings (34) longitudinally spaced.

9. The attachment pylon (4) as claimed in any one of Claims 2 to 8, **characterised in that** said fixing surface (38) of each of said lateral fittings (34) of the rear engine attachment (8) takes the form of a flat surface oriented according to a plane defined by a transversal direction (Y) and a longitudinal direction (Y) of the pylon.

10. The attachment pylon (4) as claimed in any one of Claims 2 to 9, **characterised in that** each of said two lateral fittings (34) of the rear engine attachment is made of titanium.

11. The attachment pylon (4) as claimed in any one of the preceding claims, **characterised in that** said rear engine attachment (8) is designed so as to define two half-fasteners each capable of ensuring thrust force collection exerted according to a vertical direction (Z) of said pylon.

12. The attachment pylon (4) as claimed in any one of the preceding claims, **characterised in that** said first and second shear slugs (124, 126) are traversed by a plane of symmetry (P) vertical and longitudinal of said pylon.

13. Ensemble engine (1) for aircraft **characterised in that** it comprises an attachment pylon (4) as claimed in any one cf the preceding claims, and an engine (2) mounted fixed on said pylon.

14. An aircraft comprising at least one engine assembly (1) as claimed in Claim 13.

## Patentansprüche

1. Aufhängungssystem (4) für ein Luftfahrzeugtriebwerk (2), umfassend eine starre Struktur (10), die einen Kasten bildet, sowie ein Triebwerkanbringungssystem (11), das fest an der starren Struktur (10) angebracht ist und insbesondere eine hintere Triebwerkhalterung (8) aufweist, die einen Halterungskörper (42) umfasst, an dem mindestens ein Schwingarm (52) beweglich befestigt ist, wobei das Triebwerkanbringungssystem (11) ferner eine Vorrichtung (9) zur Aufnahme von durch das Triebwerk (2) erzeugten Schubkräften umfasst, die zwei seitliche Stangen (90) aufweist, die an ihrem hinteren Ende (90a) an einer Traverse (92) befestigt sind, die beweglich an einem Traversenträger (100) angebracht ist, wobei dieser fest an dem Halterungskörper (42) der hinteren Triebwerkhalterung angebracht ist,
**dadurch gekennzeichnet, dass** das Aufhängungssystem ferner ein Zwischenstück (120), das zwischen den Traversenträger (100) und den Kasten eingefügt ist, einen ersten Scherungsbolzen (124), der sich durch eine erste Befestigungsgrenzfläche (Pi1) zwischen dem Zwischenstück (120) und dem Kasten hindurch erstreckt, und einen zweiten Scherungsbolzen (126), der sich durch eine zweite Befestigungsgrenzfläche (Pi2) zwischen dem Zwischenstück (120) und dem Traversenträger (100) hindurch erstreckt, umfasst,
und dass, von der Seite aus gesehen, sich der Schnittpunkt (Q1) zwischen einer Achse (125) des ersten Bolzens (124) und der ersten Grenzfläche (Pi1) sowie der Schnittpunkt (Q2) zwischen einer Achse (127) des zweiten Bolzens (126) und der zweiten Grenzfläche (Pi2) auf der gemeinsamen Achse (130) der zwei seitlichen Stangen zur Aufnahme von Schubkräften (90) befinden.

2. Aufhängungssystem (4) nach Anspruch 1, **dadurch gekennzeichnet, dass** die hintere Triebwerkhalterung (8) an jeder Seite des Kastens mindestens einen Seitenbeschlag (34) aufweist, der mit einer Seitenplatte (30) des Kastens in Kontakt steht und fest an dieser angebracht ist, wobei der Seitenbeschlag (34) eine Befestigungsoberfläche (38) aufweist, die mit einer an dem Körper der hinteren Triebwerkhalterung (42) vorgesehenen Befestigungsoberfläche (40) in Kontakt steht, wobei sich die Befestigungsoberfläche (38) vom Kasten abgewandt in Richtung des mindestens einen Schwingarms (52) befindet.

3. Aufhängungssystem (4) nach Anspruch 2, **dadurch gekennzeichnet, dass** der Kasten durch den Zusammenbau von einem oberen Längsträger (26), einem unteren Längsträger (28), zwei Seitenplatten (30) und Querrippen (32), die die Längsträger und Platten verbinden, gebildet ist, wobei sich die Befestigungsoberfläche (38) und der Körper der hinteren Triebwerkhalterung (42) unter dem unteren Längsträger (28) und von diesem beabstandet befinden.

4. Aufhängungssystem (4) nach Anspruch 2 oder Anspruch 3, **dadurch gekennzeichnet, dass** das Zwischenstück (120) Queranschlagoberflächen (134) aufweist, die mit den Seitenbeschlägen (34) in Kontakt stehen, wobei sich die Queranschlagoberflächen (134) von dem Kasten abgewandt in Richtung des mindestens einen Schwingarms (52) befinden.

5. Aufhängungssystem (4) nach Anspruch 4, **dadurch gekennzeichnet, dass** die hintere Triebwerkhalterung (8) ferner mindestens einen vertikalen Scherungsbolzen (66) aufweist, der sich nacheinander durch den Halterungskörper (42), das Zwischenstück (120) und einen Längsträger (28) des Kastens erstreckt, wobei der Sicherungsbolzen (66) die Aufnahme von Kräften, die in einer Querrichtung (Y) des Systems auftreten, gewährleisten kann.

6. Aufhängungssystem (4) nach Anspruch 2 oder Anspruch 3, **dadurch gekennzeichnet, dass** an jeder Seite des Zwischenstücks (120) ein Sekundärbeschlag (140) vorgesehen ist, der fest an dem Kasten angebracht ist und eine Queranschlagoberfläche (134) aufweist, die in Kontakt mit mindestens einem der Seitenbeschläge (34) steht, wobei sich die Queranschlagoberflächen (134) von dem Kasten abgewandt in Richtung des mindestens einen Schwingarms (52) befinden.

7. Aufhängungssystem (4) nach Anspruch 6, **dadurch gekennzeichnet, dass** der Sekundärbeschlag (140) an dem Körper der hinteren Triebwerkhalterung (42) über eine Verbindungsquerachse (142) angebracht ist.

8. Aufhängungssystem (4) nach Anspruch 7, **dadurch gekennzeichnet, dass** die hintere Triebwerkhalterung (8) an jeder Seite des Kastens zwei in Längsrichtung beabstandete Seitenbeschläge (34) aufweist, die in Kontakt mit der Seitenplatte (30) des Kastens angeordnet sind und fest an dieser angebracht sind, wobei sich die Verbindungsquerachse (142) zwischen den beiden in Längsrichtung beabstandeten Seitenbeschlägen (34) befindet.

9. Aufhängungssystem (4) nach einem der Ansprüche 2 bis 8, **dadurch gekennzeichnet, dass** die Befestigungsoberfläche (38) von jedem der Seitenbeschläge (34) der hinteren Triebwerkhalterung (8) die Form einer planen Oberfläche aufweist, die in einer durch eine Querrichtung (Y) und eine Längsrichtung (X) des Systems festgelegten Ebene ausgerichtet ist.

10. Aufhängungssystem (4) nach einem der Ansprüche 2 bis 9, **dadurch gekennzeichnet, dass** jeder der beiden Seitenbeschläge (34) der hinteren Triebwerkhalterung in Titan ausgeführt ist.

11. Aufhängungssystem (4) nach einem der vorhergehenden Ansprüche, **dadurch gekennzeichnet, dass** die hintere Triebwerkhalterung (8) derart gestaltet ist, dass zwei Halbhalterungen festgelegt sind, von denen jede die Aufnahme von Kräften, die in einer Vertikalrichtung (Z) des Systems auftreten, gewährleisten kann.

12. Aufhängungssystem (4) nach einem der vorhergehenden Ansprüche, **dadurch gekennzeichnet, dass** sich durch den ersten und den zweiten Scherungsbolzen (124, 126) eine vertikale und longitudinale Symmetrieebene (P) des Systems hindurch erstreckt.

13. Triebwerkanordnung (1) für ein Luftfahrzeug, **dadurch gekennzeichnet, dass** sie ein Aufhängungssystem (4) nach einem der vorhergehenden Ansprüche sowie ein fest an dem System angebrachtes Triebwerk (2) umfasst.

14. Luftfahrzeug, das mindestens eine Triebwerkanordnurig (1) nach Anspruch 13 aufweist.
